# FASCICULE DE BREVET EUROPEEN

(11) **EP 3 390 230 B1**
(45) Date de publication et mention de la délivrance du brevet: **12.06.2019**
(21) Numéro de dépôt: 17708861.4
(22) Date de dépôt: 13.02.2017
(51) Int. Cl.: B64G 1/24, B64G 1/10, B64G 1/44, B64G 1/64, G05D 1/08, B64G 1/28

(54) **PROCÉDÉ DE COMMANDE DE GUIDAGE D'ATTITUDE D'UN SATELLITE, SATELLITE, PLURALITÉS DE SATELLITES ET PROGRAMME D'ORDINATEUR ASSOCIÉ**
VERFAHREN ZUR STEUERUNG DER LAGEFÜHRUNG EINES SATELLITEN, SATELLITEN, MEHRERE SATELLITEN UND ZUGEHÖRIGES COMPUTERPROGRAMM
METHOD FOR CONTROLLING THE GUIDANCE OF ATTITUDE OF A SATELLITE, SATELLITE, PLURALITIES OF SATELLITES, AND ASSOCIATED COMPUTER PROGRAMME

(30) Priorité: 16.02.2016 FR 1651237
(43) Date de publication de la demande: 24.10.2018
(73) Titulaire: Airbus Defence and Space SAS, 31402 Toulouse Cedex 4 (FR)
(72) Inventeur: GIRAUD, Emmanuel, 31402 Toulouse (FR)
(74) Mandataire: Cabinet Plasseraud
(86) Numéro de dépôt international: PCT/FR2017/050318
(87) Numéro de publication internationale: WO 2017/140972

(56) Documents cités:
- EP-A1- 2 489 593
- WO-A1-2009/150081

## Description

L'invention concerne le domaine spatial, et plus particulièrement, l'invention concerne le guidage de l'attitude d'un ou de plusieurs satellites optiques en orbite autour d'un astre, en particulier la Terre.

Un satellite optique est un satellite qui comprend un instrument optique et dont la mission principale est liée à cet instrument. Il s'agit par exemple d'un satellite dont la mission est la prise de vues de la surface de la Terre, ou de tout autre astre, à des fins de surveillance ou de cartographie.

Un instrument optique pour les missions spatiales est formé typiquement d'au moins un objectif dioptrique, catadioptrique ou à miroir présentant un axe optique, et le miroir primaire permettant de focaliser les rayons lumineux, pour obtenir une image dans un plan focal équipé de systèmes de détection. L'axe de visée peut être confondu avec l'axe optique de l'objectif ou peut former un angle avec celui-ci au moyen de miroirs de renvoi. Lorsque l'instrument optique est un instrument de prise de vue, c'est-à-dire comprenant au moins un capteur permettant d'y former une image d'une région, par exemple une région du sol terrestre, l'instrument optique définit également un champ de vue correspondant au cône tronqué s'étendant depuis la surface fonctionnelle du capteur, c'est-à-dire la surface du capteur sur laquelle les images se forment jusqu'à la région de prise de vue.

Le satellite comprend en outre des équipements dits secondaires, participant au bon fonctionnement général du satellite, tels que des propulseurs pour corriger la trajectoire du satellite, des roues de réaction pour modifier l'orientation angulaire du satellite, des panneaux radiatifs pour évacuer la chaleur ou encore un générateur solaire ou une batterie pour la réception et la gestion de la puissance.

L'orientation de l'axe de visée vers la zone à observer peut se faire par un miroir de renvoi mobile devant le télescope, le satellite gardant une orientation fixe, comme pour les satellites SPOT 1 à 5. Dans ces satellites, on utilise généralement un générateur solaire orientable pointant vers le soleil. Un inconvénient de ces satellites selon l'état de la technique est que la présence du miroir de renvoi mobile par rapport au corps du satellite diminue la qualité de la prise de vue. En effet, l'introduction d'éléments mobiles est préjudiciable à la stabilité de l'axe de visée de l'instrument optique. En outre, la présence de moyens pour obtenir le déplacement du miroir de renvoi mobile augmente la masse du satellite et son encombrement, augmentant les coûts de conception et de lancement du satellite.

Dans les satellites plus récents tels que les satellites PLEIADES, le satellite est orienté de sorte que l'axe de visée du télescope vise la zone à observer. En outre, le générateur solaire est fixe. On parle alors de l'attitude, ou attitude angulaire, du satellite comme étant la position angulaire d'un référentiel lié au satellite par rapport à un référentiel extérieur, par exemple lié à l'orbite du satellite.

Ces satellites peuvent fonctionner selon deux statuts, à savoir un statut de fonctionnement dans lequel l'instrument optique est mis en oeuvre pour prendre une prise de vue, en pratique une succession de prises de vue, et un statut d'attente dans lequel l'instrument optique n'est pas utilisé. Ce statut d'attente permet de recharger les batteries du satellite. Dans ce statut d'attente, l'attitude du satellite est alors telle que les panneaux solaires fixes plans sont normaux à la direction du soleil. Les satellites PLEIADES fonctionnent sur cette base.

Entre un statut et un autre, l'attitude du satellite et l'orientation de ses équipements sont modifiées dans le référentiel extérieur de manière à optimiser soit la prise de vue, soit la recharge des batteries en orientant le générateur perpendiculairement aux rayons du Soleil. Dans le cas d'une orbite LEO (pour Low Earth Orbit), dans laquelle le satellite est à une altitude telle que la traînée est importante, ce changement d'orientation entre les deux statuts de fonctionnement pose le problème de l'optimisation des surfaces pour réduire la traînée. En effet, pour réduire la traînée, la surface frontale du satellite suivant le sens de son déplacement sur son orbite doit être réduite. Or, plus la surface est réduite, moins celle-ci est disponible pour y fixer des équipements. Les deux statuts de fonctionnement impliquent que la face frontale du satellite change, de sorte que plusieurs faces du satellite doivent avoir leur surface réduite, ce qui réduit en pratique la possibilité de réduire la trainée du satellite en jouant sur sa forme.

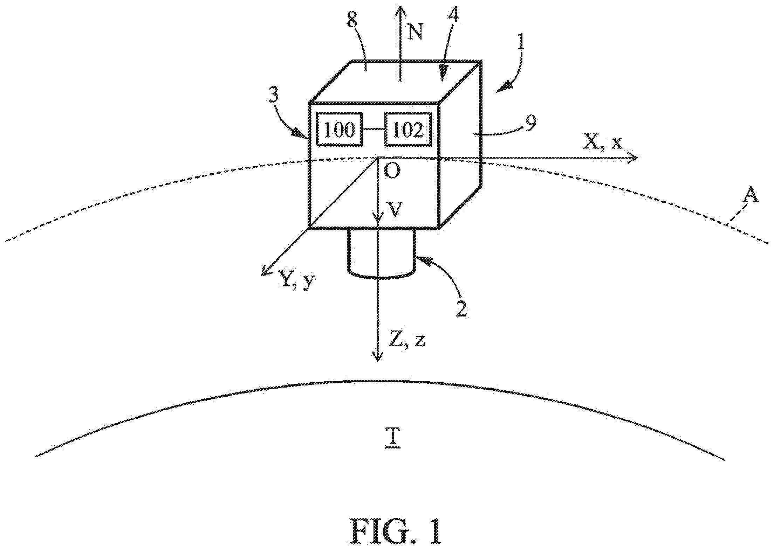

Ce type de satellite nécessite des actionneurs inertiels (typiquement des CMG) d'attitude performant autour des trois axes X, Y, Z, selon la figure 1, pour orienter rapidement le satellite vers la zone visée. Ces actionneurs de type CMG sont onéreux et lourds.

Le document EP 2 489 593 décrit un satellite de section triangulaire et comportant sur ces arrêtes des générateurs solaires aptes à être pivotés pour maximiser la captation solaire.

Il existe donc un besoin pour un nouveau procédé permettant de surmonter notamment les inconvénients de l'état de la technique précités.

A cet effet, l'invention a pour objet un procédé de commande de guidage d'attitude d'un satellite par rapport à un référentiel orbital orthogonal comprenant un axe dit de vitesse, un axe dit orbital et un axe dit Nadir, le long d'une portion d'orbite autour de la Terre, ladite portion d'orbite étant éclairée par un rayonnement solaire ; le satellite se déplaçant dans la direction de l'axe vitesse, le satellite comprenant un corps principal, un instrument optique ayant un axe de visée fixe par rapport au corps principal, au moins un générateur solaire fixe par rapport au corps principal définissant une surface fonctionnelle dont la normale présente au moins une composante perpendiculaire à l'axe vitesse, au moins un dispositif de contrôle d'attitude et une unité de commande connectée au dispositif de contrôle d'attitude, ledit procédé comportant une première étape de transmission (104) de commande de guidage de l'unité de commande à l'unité de contrôle d'attitude pour pointer l'axe de visée de l'instrument optique en direction de régions à imager,
caractérisé en ce que le procédé comporte en outre une deuxième étape de transmission (106) de commande de guidage de l'unité de commande (102) à l'unité de contrôle d'attitude (100) pour diriger la normale (**N, Na, Nb**) à la surface fonctionnelle en direction du rayonnement solaire, et les commandes de guidage de la première et de la deuxième étapes sont uniquement des commandes en rotation du satellite autour de l'axe vitesse, l'angle de rotation autour de l'axe d'orbite et l'axe Nadir dans le référentiel orbital étant maintenus sensiblement nuls.

Suivant des modes particuliers de réalisation, le satellite artificiel comporte l'une ou plusieurs des caractéristiques suivantes :
- les commandes de guidage comprennent des commandes propres à faire pivoter le satellite autour de l'axe vitesse sur des plages angulaires pour balayer avec l'axe de visée une portion de la terre ;
- le procédé décrit ci-dessus est mis en oeuvre par plusieurs satellites ;
- la normale à la surface fonctionnelle du générateur solaire est parallèle à l'axe de visée de l'instrument optique et orientée dans le sens opposé ;
- les angles de rotation autour de l'axe de vitesse sont limités à un angle de bridage prédéterminé, ledit angle de guidage étant défini par rapport à l'axe orbital ;
- l'angle de bridage est de 50° ;
- lorsque l'éclairement du satellite est nul, par exemple lors d'une éclipse, le satellite est pivoté autour de l'axe vitesse de manière à pointer l'axe de visée vers la Terre ; et
- l'axe de visée est perpendiculaire à l'axe de vitesse ;
- l'instrument optique comprend un objectif avec un axe optique parallèle à l'axe de visée.

L'invention a également pour objet un satellite comprenant un corps principal, un instrument optique dont l'axe de visée est fixe par rapport au corps principal, au moins un générateur solaire fixe par rapport au corps principal, au moins un dispositif de contrôle d'attitude et une unité de commande connectée au dispositif de contrôle d'attitude, l'unité de commande étant propre à exécuter le procédé de commande de guidage selon l'une quelconque des revendications précédentes, le dispositif de contrôle d'attitude est propre à faire pivoter le satellite autour d'un premier axe, d'un deuxième axe et d'un troisième axe, lesdits premier, deuxième axe et troisième axe étant perpendiculaires entre eux, ledit troisième axe étant est parallèle à l'axe de visée de l'instrument optique et orienté dans le même sens, caractérisé en ce que la capacité de couple du dispositif de contrôle d'attitude selon le deuxième axe et/ou selon le troisième axe est inférieure à 40% de la capacité de couple selon le premier axe.

Suivant des modes particuliers de réalisation, le satellite artificiel comporte l'une ou plusieurs des caractéristiques suivantes :
- qui comprend un dispositif d'interface destiné à coopérer avec un dispositif d'interface complémentaire d'un lanceur ou d'un satellite, et comprenant une structure intermédiaire reliant le corps du satellite au dispositif d'interface, l'axe de visée de l'instrument optique étant orienté vers le dispositif d'interface ; et
- la normale à la surface fonctionnelle du générateur solaire est parallèle à l'axe de visée de l'instrument optique et orientée dans le sens opposé.

L'invention concerne également une pluralité de satellites conformés selon les caractéristiques mentionnées ci-dessus. La pluralité de satellites est destinés à opérer en constellation, ladite pluralité de satellites étant apte à être guidée en orbite par le procédé mentionné ci-dessus.

Enfin, l'invention concerne un produit programme d'ordinateur caractérisé en ce qu'il comporte un ensemble d'instructions de code de programme qui lorsqu'elles sont exécutées par un processeur, mettent en oeuvre le procédé mentionné ci-dessus.

D'autres caractéristiques et avantages de l'invention apparaîtront à la lumière de la description de modes de réalisation accompagnée des figures dans lesquelles :
La figure 1 est une représentation schématique d'un satellite en orbite autour de la Terre et de son référentiel orbital local.
La figure 2A est un diagramme qui représente les étapes du procédé selon l'invention.
La figure 2B est un schéma illustrant un exemple de rotation d'un satellite guidé par le procédé selon l'invention.
La figure 3 est une représentation schématique de trois satellites d'une constellation guidés par le procédé selon l'invention dans un statut de prise de vue.
Les figures 4 et 5 sont des schémas illustrant des exemples de prises de vue par un satellite (figure 4) et par deux satellites (figure 5) guidés par le procédé selon l'invention.
La figure 6 est une représentation schématique dans le plan XZ d'un satellite dans un statut d'attente.
La figure 7 est une représentation schématique en plan du satellite de la figure 6 dans le plan YZ.
Les figures 8 à 10 représentent chacune un exemple de positionnement d'un générateur solaire sur un satellite guidé par le procédé selon l'invention.
La figure 11 est un graphique illustrant l'attitude d'un satellite selon un premier positionnement du générateur solaire guidé par le procédé selon l'invention dans un statut d'attente.
La figure 12 est un graphique illustrant l'attitude d'un satellite selon un deuxième positionnement du générateur solaire guidé par le procédé selon l'invention dans un statut d'attente.
La figure 13 est une vue tridimensionnelle schématique d'un autre exemple de conception d'un satellite guidé par le procédé selon l'invention.

Sur la figure 1, il est représenté un exemple d'un satellite **1** de prise de vue comprenant un instrument **2** optique, se déplaçant le long d'une orbite **A** autour d'un astre tel que la Terre **T.**

De manière classique, le satellite 1 a été préalablement placé dans un lanceur, grâce auquel le satellite 1 est lancé dans l'espace. Le satellite 1 est largué par le lanceur dans l'espace. Puis il rejoint son orbite opérationnelle prévue A.

Selon l'exemple sur la figure 1, mais de manière non limitative, le satellite comprend un corps **3** parallélépipédique de centre de gravité **O** ayant quatre faces **9.** L'instrument 2 optique est monté sur une des faces 9 du corps 3 de manière à pouvoir diriger son axe V de visée vers la Terre T pour une prise de vue.
Deux référentiels sont définis pour le satellite 1.

Un premier référentiel OXYZ est lié à l'orbite A du satellite 1 en un point donné, ici le centre O de gravité du corps 3, et est appelé référentiel orbital local. Le référentiel OXYZ orbital local est orthogonal, et comprend trois axes :
- un axe parallèle au vecteur vitesse du satellite 1 sur son orbite A noté X et appelé axe vitesse,
- un axe perpendiculaire au plan de l'orbite A noté Y et appelé axe orbital, et
- un axe pointant vers le foyer principal de l'orbite A noté Z, c'est-à-dire vers la Terre T, et appelé axe Nadir.

Dans ce qui suit, l'attitude du satellite 1 est définie comme étant le mouvement du satellite 1 dans le référentiel orbital local OXYZ.

Un deuxième référentiel Oxyz est lié au corps 3 du satellite 1 et à ses faces, et est appelé référentiel satellite. Le référentiel Oxyz satellite est orthogonal. Il comprend un premier axe x, un deuxième axe y et un troisième axe z. Le troisième axe z est parallèle à l'axe (V) de visée de l'instrument (2) optique et est orienté dans le même sens.

Dans l'exemple de la figure 1, le corps 3 est parallélépipédique, chaque axe est perpendiculaire à une face du corps 3 du satellite.

Sur la figure 1, le deuxième référentiel Oxyz a été représenté dans une position dans laquelle il est confondu avec le premier référentiel OXYZ.

L'instrument 2 optique est fixe par rapport au corps du satellite 1, c'est-à-dire que son axe V de visée ne se déplace pas par rapport au référentiel Oxyz satellite. A des fins de simplification de la description, le référentiel Oxyz satellite est dans ce qui suit tel que l'axe z est confondu avec l'axe V de visée de l'instrument 2 optique, et l'axe x est confondu avec l'axe X vitesse du référentiel orbital local. Sur la figure 1, l'axe de visée et l'axe optique de l'objectif sont identiques. Mais ils pourraient être différents, par exemple en utilisant un miroir de renvoi fixe.

Le satellite 1 comprend par ailleurs un générateur **4** solaire. Le générateur 4 solaire est également fixe par rapport au corps 3 du satellite, c'est-à-dire qu'il est fixe par rapport au référentiel satellite. Plus précisément, le générateur 4 solaire présente au moins une surface fonctionnelle, c'est-à-dire une surface équipée pour recevoir l'énergie solaire et la transformer en énergie utilisable par le satellite 1, orientée selon une normale N. Par exemple, le générateur 4 solaire est un panneau solaire. Dans ce qui suit, on parlera d'ensoleillement pour définir la puissance reçue par le générateur 4 solaire et issue des rayons du Soleil.

Selon l'exemple de la figure 1, la normale N du générateur 4 solaire est parallèle à l'axe Z, et orientée dans le sens opposé à celui de l'axe V de visée de l'instrument 2 optique. La normale N à la surface du générateur solaire comprend au moins une composante perpendiculaire à l'axe X vitesse.

Le satellite 1 comprend en outre un dispositif de contrôle d'attitude 100 et une unité de commande 102 connectée à ce dispositif de contrôle d'attitude 100.

Le dispositif de contrôle d'attitude comprend notamment des actionneurs inertiels. Ces actionneurs inertiels permettent de mettre en mouvement le corps 3 du satellite 1 dans le référentiel orbital local Oxyz. Il s'agit par exemple de roues de réaction ou de CMG.

Les actionneurs inertiels du dispositif de contrôle d'attitude 100 sont agencés perpendiculairement les uns aux autres sur le corps principal 3 du satellite. Certains actionneurs inertiels permettent de faire pivoter le satellite 1 autour du premier axe x. Ils sont dits actionneurs selon le premier axe x. Certains actionneurs inertiels permettent de faire pivoter le satellite 1 autour du deuxième axe y. Ils sont dits actionneurs selon le deuxième axe y. Et enfin d'autres actionneurs inertiels permettent de faire pivoter le satellite 1 autour du troisième axe z. Ils sont dits actionneurs selon le troisième axe z.

Selon l'invention, les actionneurs inertiels selon le deuxième axe y et/ou les actionneurs selon le troisième axe z ont une capacité maximale de couple inférieure à 40% de la capacité maximale de couple des actionneurs selon le premier axe x. Préférentiellement, les actionneurs inertiels selon le deuxième axe y et/ou selon le troisième axe z ont des capacités maximales de couple inférieure à 30% de la capacité de couple maximale des actionneurs selon le premier axe x.

Dans la présente demande de brevet, on appelle capacité de couple, la valeur maximale de couple que peut générer un actionneur inertiel pour faire pivoter le satellite.

Avantageusement, les actionneurs inertiels selon le deuxième axe y et/ou les actionneurs selon le troisième axe z montés dans le satellite selon l'invention sont donc plus petit et plus légers que les actionneurs inertiels selon ces mêmes axes montés dans les satellites de l'état de la technique.

De façon plus générale, les trois actionneurs peuvent-être agencés différemment, sans être alloués individuellement à une rotation suivant les axes x, y ou z. Ainsi, un ou plusieurs des trois actionneurs peuvent ne pas être agencés sur les axes x, y et z.

Un nombre plus important d'actionneurs peut être utilisé à des fins de redondance. La capacité maximale de couple suivant le deuxième axe y et/ou suivant le troisième axe z restera cependant inférieure de 40% à la capacité suivant le premier axe x, ce qui permet l'utilisation d'une grappe d'actionneurs plus légère que l'état de la technique.

De préférence, la capacité maximale de couple suivant le deuxième axe y et/ou suivant le troisième axe z est inférieure de 30% à la capacité suivant le premier axe x.

L'unité de commande 102 comprend une mémoire et une unité de calcul. Il s'agit par exemple d'un processeur.

L'unité de commande 102 est propre à mettre en oeuvre le procédé de guidage selon l'invention.

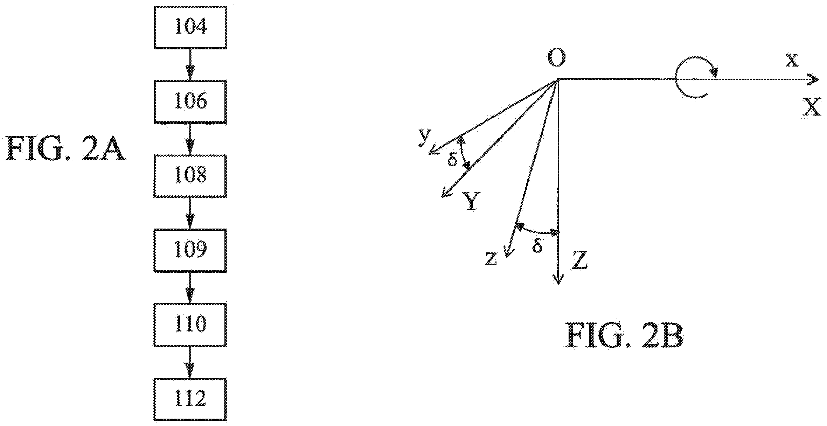

En référence à la figure 2A, le procédé de guidage comporte une étape 104 de transmission de commandes de guidage de l'unité de commande 102 vers l'unité de contrôle d'attitude 100.

Ces commandes de guidage sont définies par l'unité de commande à partir d'un plan de manoeuvre transmis au satellite par un opérateur situé dans une station sur la Terre ou par des lois de commande et/ou des tableaux définis en fonction de la position du soleil par rapport à l'orbite A. Ces lois de commandes ou ces tableaux sont préenregistrés dans la mémoire de l'unité de commande ou transmis à celle-ci par un opérateur au sol.

Selon le procédé de l'invention, les commandes de guidage comprennent uniquement des commandes de guidage en rotation du satellite 1 autour de l'axe X vitesse, c'est-à-dire des commandes en roulis.

Les consignes de rotation de la commande du contrôle d'attitude sont nulles autour de l'axe Y d'orbite et de l'axe Z Nadir. En pratique, il est possible que l'angle de rotation soit non nul autour de l'axe Y d'orbite ou de l'axe Z Nadir en raison des erreurs résiduelles de la loi de contrôle d'attitude et de la présence de couples perturbateurs. Néanmoins, dans un tel cas, ces angles sont négligeables. Ces angles de rotation sont par exemple inférieurs à 2 degrés et de préférence inférieurs à 1 degré. L'angle de rotation autour de l'axe Y d'orbite et de l'axe Z Nadir dans le référentiel orbital est donc maintenus sensiblement nul.

L'étape de transmission 104 se poursuit par une étape 106, au cours de laquelle le satellite pivote uniquement autour de l'axe X de vitesse pour pointer l'axe V de visée en direction d'une région à imager. Dans cette position, l'instrument optique image une région 7, par une ou plusieurs prise de vue.

La surface de la région à imager 7 est limitée par le champ de vue de l'instrument 2 optique.

Au cours d'une étape 108, l'unité de commande 102 transmet une commande de rotation uniquement autour de l'axe X de vitesse afin d'imager une autre portion de la terre.

Au cours d'une étape 109, le satellite 1 est pivoté uniquement autour de l'axe X vitesse, afin que l'axe de visée V soit dirigé vers l'autre portion de la terre, de sorte que l'instrument optique image une autre région 7.

Au cours d'une étape 110, l'unité de commande 102 transmet à nouveau une commande de guidage au dispositif de contrôle d'attitude 100.

Cette commande de guidage est propre à minimiser l'angle entre la normale N de la surface fonctionnelle du générateur 4 solaire et la direction R des rayons solaires pour obtenir un ensoleillement maximal. Cette commande de guidage comporte uniquement une rotation autour de l'axe X vitesse.

Au cours d'une étape 112, le satellite 1 pivote uniquement autour de l'axe X de vitesse. Le satellite 1 est alors dans le statut d'attente.

La figure 2B représente de manière schématique l'attitude du satellite 1 dans le cas particulier d'un état initial dans lequel le référentiel satellite Oxyz est confondu avec le référentiel orbital local OXYZ. Sur ce schéma, il est représenté une deuxième position du satellite 1 dans laquelle il a pivoté d'un angle δ autour de l'axe X vitesse à partir de la position initiale, de sorte que les axes respectivement y et z du référentiel satellite se sont déplacés d'un angle δ par rapport aux axes respectivement Y et Z du référentiel orbital local. L'axe x du référentiel satellite est toujours confondu avec l'axe X du référentiel orbital local, puisqu'aucune rotation autour des axes Y et Z n'a eu lieu.

Ainsi, selon le procédé selon l'invention, seules des rotations autour de l'axe X vitesse sont réalisées par le satellite.

Il en résulte un satellite d'une conception simplifiée. En particulier, le dispositif de contrôle d'attitude n'a besoin d'être opérationnel qu'en rotation autour de l'axe X vitesse pour le guidage de l'attitude du satellite.

Selon un mode de réalisation de l'invention, le satellite 1 fait partie d'une constellation de satellites, c'est-à-dire un groupe de satellites 1 destinés à travailler ensemble dans le cadre d'une mission. Les satellites de la constellation dont l'attitude est guidée par le procédé selon l'invention peuvent être identiques, facilitant la fabrication en série sans augmenter les coûts.

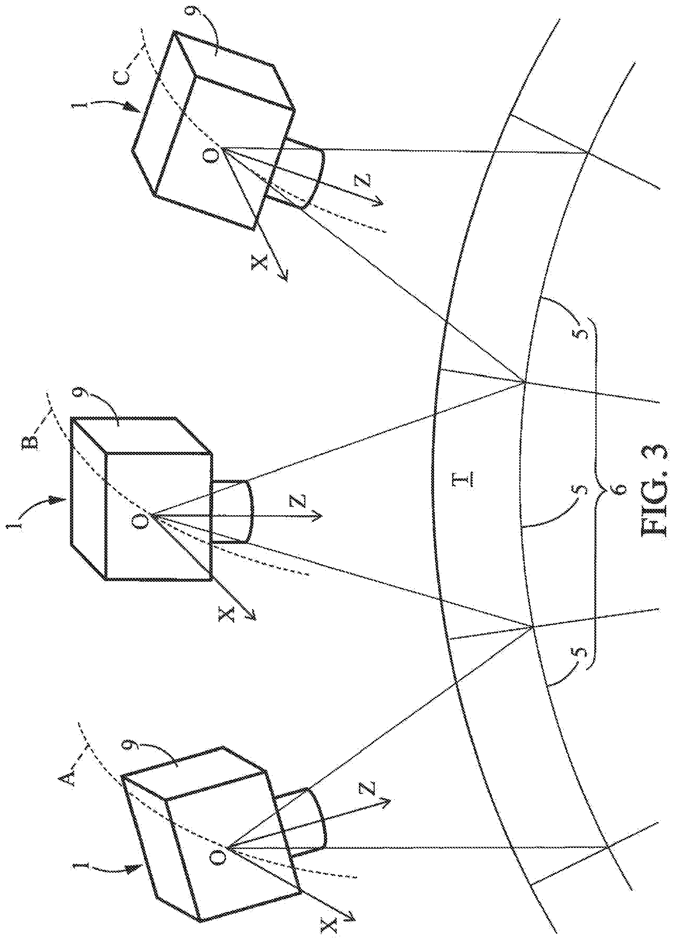

Par exemple, sur la figure 3, il a été représenté trois satellites 1 d'une même constellation, se déplaçant chacun suivant une orbite A, B et respectivement C. L'attitude de ces satellites est guidé par le procédé de commande selon l'invention. En pivotant les trois satellites 1 uniquement autour de leur axe X vitesse sur des plages angulaires définies, et en considérant leur déplacement sur leur orbite A, B et C, l'axe de visée V de l'instrument optique de chaque satellite est apte à balayer une région du sol 5, de sorte qu'ensemble, les trois satellites 1 peuvent potentiellement prendre une vue du sol d'une région **6** plus importante.

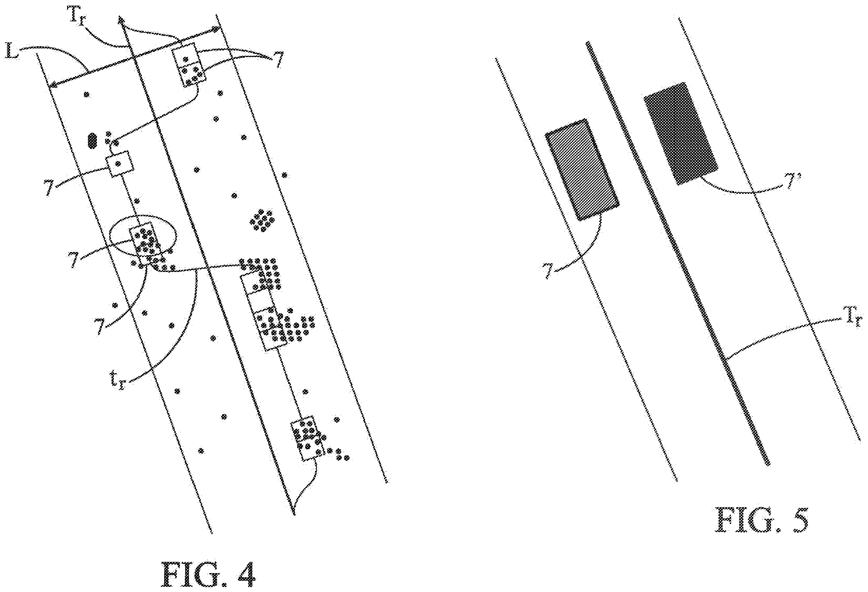

Sur la figure 4, on a représenté de manière schématique différentes régions **7** du sol qu'un satellite 1 se déplaçant selon une orbite A correspondant au sol à une trajectoire **Tr** peut prendre en image. En pivotant autour de l'axe X vitesse, l'axe de visée de l'instrument 2 optique suit une trajectoire tr, comprise dans une bande au sol d'une largeur L. Lorsque deux régions 7, **7**' du sol devant être prises en image sont côte à côte, de part et d'autre de la trajectoire Tr au sol d'un satellite 1, le satellite 1 prend une première région 7 du sol et un autre satellite 1 d'une même constellation peut être chargé de la prise de vue de l'autre région 7'. Dans l'exemple de la figure 3 les satellites sont sur la même orbite, mais ils peuvent être sur des orbites différentes.

Il est également possible de prendre la même région ou zone sous des angles différents, par exemple pour obtenir une image stéréo.

Ainsi, en déplaçant le satellite 1 dans le statut de fonctionnement uniquement autour de l'axe X vitesse, et en considérant une constellation de satellites, les résultats des prises de vue sont au moins équivalents à ceux de l'état de la technique.

Comme l'instrument 2 optique n'a pas besoin de comprendre des parties mobiles, la qualité des prises de vue est augmentée. En effet, l'axe de visée et le champ de vue de l'instrument 2 optique ne sont pas déplacés par rapport au corps 3 du satellite. Cette stabilité améliore la qualité et donc la précision des prises de vue.

Lorsque le satellite 1 est dans le statut d'attente, le corps 3 du satellite 1 est pivoté autour de l'axe X vitesse pour orienter le générateur 4 solaire vers les rayons R du Soleil. Par exemple, il est calculé la meilleure position autour de l'axe X vitesse pour que l'angle entre la normale N de la surface du générateur 4 solaire et la direction R des rayons du Soleil soit le plus faible possible. Il n'est donc pas nécessaire de prévoir à l'avance une position du générateur 4 solaire sur le corps 3 du satellite 1 en fonction de son orbite, puisque le procédé de guidage d'attitude permet d'optimiser l'ensoleillement du générateur 4 solaire par rotation autour de l'axe X vitesse. Ainsi la même conception peut être conservée pour une constellation de satellites sur des orbites héliosynchrones (SSO) avec des heures locales au noeud ascendant différentes.

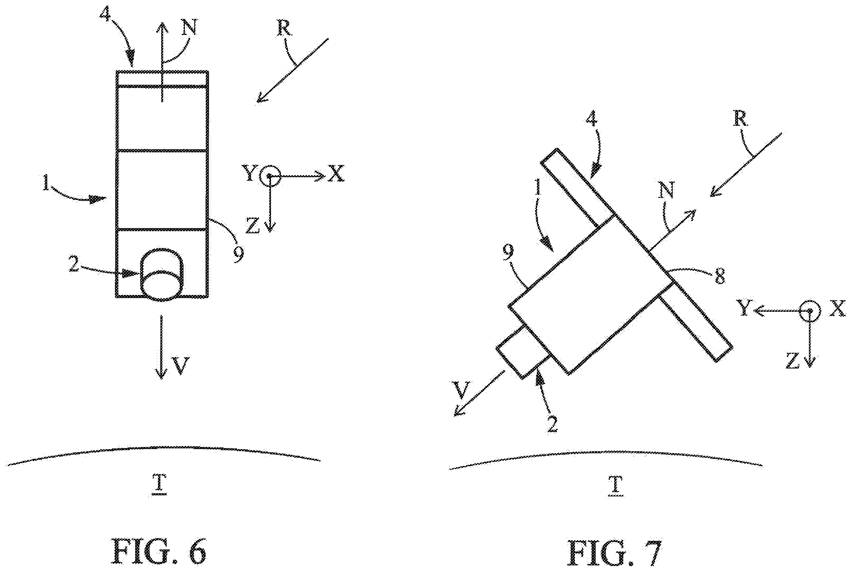

Selon un exemple (figures 6 et 7), le générateur 4 solaire comprend au moins un panneau **8** solaire dont la surface fonctionnelle, c'est-à-dire la surface recouverte de cellules solaires est orientée par la normale N. Ainsi, à partir de la position de la figure 1 par exemple, le satellite 1 est pivoté autour de l'axe X vitesse pour orienter la normale N quasiment parallèle aux rayons de direction R.

Dépendamment de la position du satellite sur l'orbite A, l'orientation de la direction R des rayons du Soleil varie. Or, le générateur 4 solaire est fixe par rapport au corps 3 du satellite, de sorte que la normale N du générateur solaire n'est quasiment jamais parfaitement parallèle à la direction R des rayons du Soleil. Le générateur 4 solaire peut alors comprendre plusieurs panneaux solaires, chaque panneau solaire comprenant une surface fonctionnelle dont la normale comprend au moins une composante perpendiculaire à l'axe X vitesse. La normale N de la surface fonctionnelle du générateur 4 solaire, prise en compte pour le calcul de l'optimisation dans le statut d'attente, peut alors être une normale moyenne aux normales des panneaux solaires, ou être confondue avec au moins une normale des panneaux solaires.

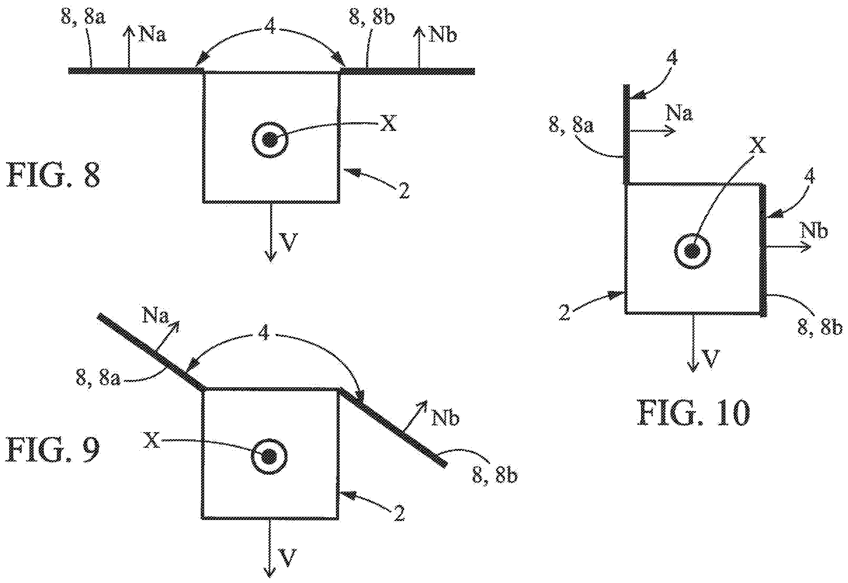

Par exemple, le générateur 4 solaire peut comprendre deux panneaux, respectivement **8a** et **8b,** chacun présentant une surface fonctionnelle avec une normale, respectivement Na et Nb. Les deux normales Na et Nb sont de préférence parallèles les unes aux autres. Par exemple, les deux panneaux 8a, 8b sont accrochés de part et d'autre d'une face du satellite. Au lancement ils seront préférentiellement en configuration repliée et déployée en orbite. Les deux panneaux peuvent être alignés avec cette face du satellite, pour former un plan (figure 8), ou être inclinés par rapport à cette face (figures 9 et 10). De manière générale, chaque face du panneau 8 solaire est toujours orientée de manière à être ne jamais avoir sa normale orientée dans une direction opposée à celle de la normale d'un autre panneau, de sorte qu'il est possible, par rotation autour de l'axe X vitesse, de trouver une position dans laquelle aucun des panneaux 8a, 8b n'est à l'ombre des rayons du Soleil.

Grâce au positionnement dans le statut d'attente du générateur 4 solaire de manière à optimiser son ensoleillement, la puissance reçue par le générateur 4 solaire est en moyenne supérieure à celle reçue par un générateur solaire qui aurait été monté sur le corps d'un satellite avec un calage initial optimisé. Par exemple, il a été établi que pour un générateur 4 solaire ayant une surface fonctionnelle de 2,4 m² monté sur un satellite 1 d'orbite héliosynchrone, dont l'attitude est guidée par le procédé selon l'invention, c'est-à-dire uniquement en rotation autour de l'axe X vitesse, la puissance disponible au niveau du satellite est comprise entre 230W et 350W, en fonction de l'heure locale (LTAN) considérée et du jour dans l'année, tandis que pour un générateur solaire fixé sur le corps du satellite de manière à optimiser son ensoleillement lors du pointage de l'axe optique de l'objectif de l'instrument vers la Terre, la puissance générée est comprise entre 205W et 310W. Ainsi, grâce au procédé selon l'invention, la puissance maximale générée est augmentée entre 12% et 18%.

Ainsi, le procédé de commande de guidage de l'attitude d'un satellite selon l'invention permet pour n'importe quel satellite, indépendamment à la fois de son orbite caractérisée par son heure locale LTAN et du jour dans l'année (solstices et équinoxes) dans le cas d'une orbite héliosynchrone, d'adapter la position du satellite dans le statut d'attente pour maximiser l'ensoleillement de son générateur 4 solaire. Plus précisément, l'heure locale LTAN caractérise l'inclinaison de l'orbite du satellite autours de la Terre T. Ainsi, pour des satellites dont l'orbite est caractérisée par une heure locale LTAN différente, le générateur 4 solaire doit être orienté différemment pour optimiser son ensoleillement dans le statut d'attente. Avec le guidage de l'attitude par rotation uniquement autour de l'axe X vitesse, il suffit d'adapter l'orientation du satellite autour de l'axe X vitesse pour maximiser l'ensoleillement du groupe 4 solaire. Le procédé de guidage d'attitude selon l'invention permet d'avoir un satellite aux fonctionnalités attendues avec des performances accrues, pour une conception plus simple. Comme l'optimisation de l'ensoleillement du générateur 4 solaire est réglée uniquement par rotation autour de l'axe X vitesse, plusieurs satellites 1 ayant des orbites différentes peuvent avoir la même conception, et notamment des panneaux 8 solaires montés de manière identiques sur le corps du satellite.

Pour une constellation en orbites héliosynchrones, il peut être avantageux d'adapter l'angle du générateur solaire en fonction de l'heure locale de façon à diminuer les débattements d'attitude en roulis.

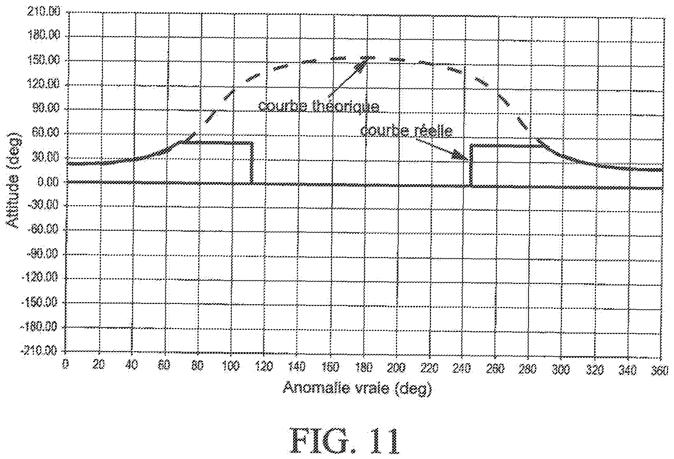

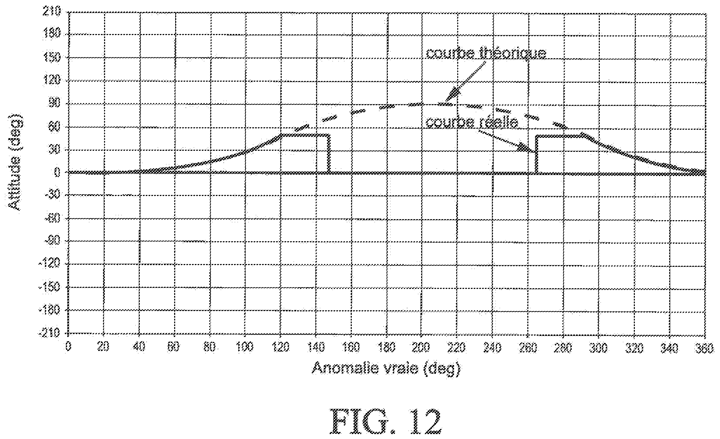

Les figures 11 et 12 sont des graphiques illustrant chacun l'attitude d'un satellite dans le statut d'attente, guidée par le procédé selon l'invention, l'axe des abscisses portant l'anomalie vraie du satellite en orbite autour de la Terre, l'axe des ordonnées portant l'angle de rotation du satellite autour de l'axe X vitesse, la rotation autour des axes Y et Z étant quasiment nulle.

Sur le graphe de la figure 11, il est considéré un satellite 1 dont le générateur 4 solaire a sa normale N à l'opposé de l'axe V de visée de l'instrument 2 - on parle alors de générateur solaire au zénith - comme illustré sur la figure 1 notamment, circulant sur une orbite héliosynchrone caractérisée par son heure locale (LTAN). A partir d'une position initiale (anomalie vraie égale à 0), le satellite est pivoté autour de son axe X vitesse d'un angle de 22,5° correspondant à l'inclinaison de l'orbite du satellite pour l'heure locale à 10h30. Au fur et à mesure que le satellite se déplace sur son orbite et que l'anomalie vraie augmente, l'angle de rotation autour de l'axe X vitesse augmente, pour optimiser l'ensoleillement du générateur 4 solaire. Toutefois, de préférence, une fois que la rotation autour de l'axe X a atteint une valeur déterminée, en l'occurrence 50° sur l'exemple de la figure 11, la rotation peut être bridée, en fonction des contraintes admissibles au niveau satellite. La courbe réelle de l'attitude du satellite en fonction de l'anomalie vraie, en trait plein, s'écarte alors de la courbe théorique, en traits discontinus, cette dernière ne tenant pas compte du bridage. Ce bridage permet notamment de sauvegarder d'autres paramètres du satellite, et éviter l'éblouissement d'équipements sensibles, tels que des senseurs stellaires. Lorsque le satellite 1 est dans l'ombre de la Terre (à partir de 110° d'anomalie vraie sur la figure 11), son éclairement par le Soleil est nul, de sorte que chercher à éclairer le générateur 4 solaire n'est plus adapté, la puissance récupérée étant nulle. Le satellite 1 peut alors être pivoté autour de l'axe X vitesse de manière à ramener l'angle de rotation autour de l'axe X vitesse à 0°, correspondant à une position dans laquelle l'axe V de visée pointe en direction du centre de la Terre. Là encore, la courbe réelle de l'attitude du satellite en fonction de son anomalie vraie est écartée de la courbe théorique. Ce pointage permet par exemple de maintenir une stabilité thermique de l'instrument 2 optique et récupérer une partie de la chaleur de la Terre. Puis, une fois que le satellite passe de nouveau dans une zone éclairée (à environ 245° d'anomalie vraie sur la figure 11) par le Soleil, la rotation autour de l'axe X vitesse se poursuit, d'abord avec un bridage à 50° pour les mêmes raisons que celles exposées précédemment, puis la courbe réelle rejoint la courbe théorique pour optimiser l'ensoleillement du générateur 4 solaire.

Sur le graphe de la figure 12, il est cette fois considéré un autre exemple d'un satellite 1 dont le générateur 4 solaire a sa normale N formant un angle de 45° par rapport à la normale de l'exemple précédent - on parle alors de générateur solaire calé à 45°-notamment, circulant sur une orbite caractérisée par son heure locale (LTAN) à 9h. Dans la position initiale (anomalie vraie égale à 0°), l'angle de rotation autour de l'axe X vitesse est nulle, car le calage à 45° est optimisé dans ce cas pour l'orbite LTAN à 9h. L'évolution de l'attitude du satellite autour de l'axe X vitesse se passe comme précédemment, avec un bridage à 50° et une mise à 0° de l'angle de rotation autour de l'axe X vitesse lorsque le satellite est dans l'ombre de la Terre pour préserver l'instrument optique.

Le guidage de l'attitude du satellite uniquement en rotation autour de l'axe X vitesse permet donc de simplifier la conception du satellite 1.

Ainsi, par exemple, le corps 3 du satellite présente toujours une même face 9 frontale, c'est-à-dire la face perpendiculaire à l'axe X vitesse, de sorte qu'il est possible de réduire la surface de la face frontale pour minimiser la traînée, sans incidence sur le reste du corps 3 du satellite 1.

La simplicité de la conception du satellite dont les équipements ne comprennent pas de partie mobile et qui est pourvu de dispositif de manoeuvre selon les axes d'orbite Y et Z simplifiés, voire en est dépourvu, a pour effet que le satellite peut être considérablement allégé.

Ainsi, l'inertie du satellite 1 en rotation autour de l'axe X vitesse est réduite, permettant de le faire passer du statut de prise de vue au statut d'attente rapidement avec des actionneurs de capacité moindre que pour des satellites manoeuvrant de l'état de la technique.

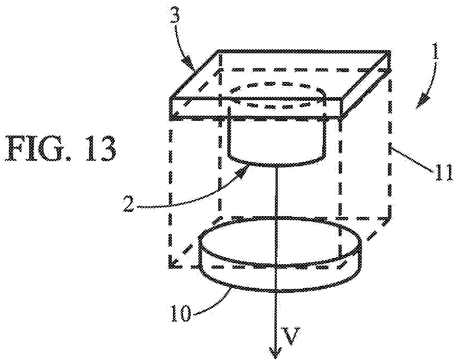

Selon un exemple de réalisation du satellite tel que schématisé sur la fig 13, l'axe V de visée de l'instrument 2 optique est orienté vers un dispositif **10** d'interface lanceur, tel qu'un anneau, destiné à coopérer avec un dispositif d'interface complémentaire d'un lanceur et/ou d'un autre satellite. Le dispositif 10 d'interface lanceur est de manière générale un anneau. Schématiquement, le corps du satellite est représenté comme étant réduit à une plaque 3 reliée à l'anneau 10 par une structure 11. L'instrument 2 optique est fixé rigidement sur la plaque 3 à l'intérieur de la structure 11. L'axe V de visée de l'instrument 2 optique est alors orienté de l'extrémité supérieure vers l'extrémité inférieure de la structure 11 intermédiaire, vers l'anneau 10 d'interface lanceur. La structure 11 intermédiaire peut former une enceinte à l'intérieur de laquelle l'instrument 2 optique est logé. Le satellite 1 peut être monté dans un lanceur en mettant en coopération l'anneau 10 avec un anneau complémentaire d'un lanceur, ou il peut être empilé sur un satellite en mettant en coopération l'anneau 10 avec un dispositif complémentaire de l'autre satellite.

Cette conception permet d'avoir un satellite 1 plus compact, réduisant encore son inertie pour le guidage de son attitude. Cette conception permet également d'atténuer les vibrations transmises depuis le lanceur par l'anneau 10 d'interface au satellite pour protéger l'instrument 2 optique. En effet, l'instrument 2 optique est éloigné de l'anneau 10 d'interface par la structure 11 intermédiaire, cette dernière absorbant les vibrations au moins en partie avant qu'elles n'atteignent le corps 3 et l'instrument 2 optique.

En outre, cette conception visée rend le satellite particulièrement adapté à un empilement de satellites dans un lanceur pour un lancement multiple, par exemple dans le cadre d'une constellation de satellites. Or, la place sous coiffe dans un lanceur est en générale réduite, et limite le nombre de satellites pouvant être empilés. Grâce à la compacité, pour un lanceur donné, un empilement de satellites selon cette conception peut comprendre un nombre plus important de satellites que pour les satellites de l'état de la technique.

## Revendications

1. Procédé de commande de guidage d'attitude d'un satellite (**1**) par rapport à un référentiel (**OXYZ**) orbital orthogonal comprenant un axe (**X**) dit de vitesse, un axe (**Y**) dit orbital et un axe (**Z**) dit Nadir, le long d'une portion d'orbite (**A**) autour de la Terre (**T**), ladite portion d'orbite (**A**) étant éclairée par un rayonnement solaire ; le satellite se déplaçant dans la direction de l'axe (**X**) vitesse, le satellite (**1**) comprenant un corps (**3**) principal, un instrument (**2**) optique ayant un axe (**V**) de visée fixe par rapport au corps (**3**) principal, au moins un générateur (**4**) solaire fixe par rapport au corps (**3**) principal définissant une surface fonctionnelle dont la normale (**N, Na, Nb**) présente au moins une composante perpendiculaire à l'axe (**X**) vitesse, au moins un dispositif de contrôle d'attitude (100) et une unité de commande (102) connectée au dispositif de contrôle d'attitude (100), ledit procédé comportant une première étape de transmission (104) de commande de guidage de l'unité de commande (102) à l'unité de contrôle d'attitude (100) pour pointer l'axe (**V**) de visée de l'instrument optique en direction de régions (7) à imager ,
**caractérisé en ce que** le procédé comporte une deuxième étape de transmission (104) de commande de guidage de l'unité de commande (102) à l'unité de contrôle d'attitude (100) pour diriger la normale (**N, Na, Nb**) à la surface fonctionnelle en direction du rayonnement solaire, et
**en ce que** les commandes de guidage de la première et de la deuxième étapes sont uniquement des commandes en rotation du satellite autour de l'axe vitesse (X), l'angle de rotation autour de l'axe (**Y**) d'orbite et l'axe (**Z**) Nadir dans le référentiel orbital étant maintenus sensiblement nuls.

2. Procédé selon la revendication 1, dans lequel les commandes de guidage comprennent des commandes propres à faire pivoter le satellite (1) autour de l'axe (**X**) vitesse sur des plages angulaires pour balayer avec l'axe (**V**) de visée une portion de la terre.

3. Procédé selon la revendication 1 ou la revendication 2, mis en oeuvre par plusieurs satellites (1).

4. Procédé selon l'une quelconque des revendications précédentes, dans lequel la normale (**N, Na, Nb**) à la surface fonctionnelle du générateur (**4**) solaire est parallèle à l'axe (**V**) de visée de l'instrument (**2**) optique et orientée dans le sens opposé.

5. Procédé selon l'une quelconque des revendications précédentes, dans lequel, les angles de rotation autour de l'axe (X) vitesse sont limités à un angle de bridage prédéterminé, ledit angle de guidage étant défini par rapport à l'axe (**Y**) orbital.

6. Procédé selon la revendication 5, dans lequel l'angle de bridage est de 50°.

7. Procédé selon l'une quelconque des revendications précédentes, dans lequel lorsque l'éclairement du satellite (**1**) est nul, le satellite (**1**) est pivoté autour de l'axe (**X**) vitesse de manière à pointer l'axe (**V**) de visée vers la Terre (T).

8. Procédé selon l'une quelconque des revendications 1 à 7, dans lequel l'axe de visée (V) est perpendiculaire à l'axe de vitesse (X).

9. Procédé selon l'une quelconque des revendications 1 à 8, dans lequel l'instrument optique comprend un objectif avec un axe optique parallèle à l'axe de visée.

10. Satellite (**1**) comprenant un corps (**3**) principal, un instrument (**2**) optique dont l'axe (**V**) de visée est fixe par rapport au corps (**3**) principal, au moins un générateur (**4**) solaire fixe par rapport au corps (**3**) principal, au moins un dispositif de contrôle d'attitude (100) et une unité de commande (102) connectée au dispositif de contrôle d'attitude (100), l'unité de commande (102) étant propre à exécuter le procédé de commande de guidage selon l'une quelconque des revendications précédentes, le dispositif de contrôle d'attitude (100) est propre à faire pivoter le satellite (1) autour d'un premier axe (x), d'un deuxième axe (y) et d'un troisième axe (z), lesdits premier (x), deuxième axe (y) et troisième axe (z) étant perpendiculaires entre eux, ledit troisième axe (z) étant est parallèle à l'axe (**V**) de visée de l'instrument (**2**) optique et orienté dans le même sens, **caractérisé en ce que** la capacité de couple du dispositif de contrôle d'attitude (100) selon le deuxième axe (y) et/ou selon le troisième axe (z) est inférieure à 40% de la capacité de couple selon le premier axe (x).

11. Satellite (**1**) selon la revendication précédente, comprenant un dispositif (**10**) d'interface destiné à coopérer avec un dispositif d'interface complémentaire d'un lanceur ou d'un satellite, et comprenant une structure (**11**) intermédiaire reliant le corps (**3**) du satellite (**1**) au dispositif (**10**) d'interface, l'axe (**V**) de visée de l'instrument (**2**) optique étant orienté vers le dispositif (**10**) d'interface.

12. Satellite (**1**) selon l'une quelconque des revendications 10 et 11, dans lequel la normale (**N, Na, Nb**) à la surface fonctionnelle du générateur (**4**) solaire est parallèle à l'axe (**V**) de visée de l'instrument (**2**) optique et orientée dans le sens opposé.

13. Pluralité de satellites conformés selon l'une quelconque des revendications 10 à 12 et destinés à opérer en constellation, ladite pluralité de satellites étant apte à être guidée en orbite par le procédé selon l'une quelconque des revendications 1 à 9.

14. Produit programme d'ordinateur **caractérisé en ce qu'**il comporte un ensemble d'instructions de code de programme qui lorsqu'elles sont exécutées par un processeur, mettent en oeuvre un procédé suivant les revendications 1 à 9.

## Patentansprüche

1. Verfahren zum Anweisen einer Lageregelung eines Satelliten (1) bezüglich eines orthogonalen orbitalen Bezugssystems (OXYZ), umfassend eine als Geschwindigkeit bezeichnete Achse (X), eine als Orbital bezeichnete Achse (Y) und eine als Nadir bezeichnete Achse (Z) entlang eines Abschnitts eines Orbits (A) um die Erde (T), wobei der Abschnitt des Orbits (A) durch Sonnenstrahlung beleuchtet ist; wobei sich der Satellit in der Richtung der Geschwindigkeitsachse (X) bewegt, wobei der Satellit (1) einen Hauptkörper (3), ein optisches Instrument (2) mit einer festen Beobachtungsachse (V) bezüglich des Hauptkörpers (3), wenigstens einen Solargenerator (4), welcher bezüglich des Hauptkörpers (3) fest ist, wobei er eine funktionale Fläche definiert, deren Normale (N, Na, Nb) wenigstens eine Komponente senkrecht zu der Geschwindigkeitsachse (X) aufweist, wenigstens eine Lage-Steuerungsvorrichtung (100) und eine mit der Lage-Steuerungsvorrichtung (100) verbundene Anweisungseinheit (102) umfasst, wobei das Verfahren einen ersten Schritt eines Übertragens (104) einer Regelungsanweisung von der Anweisungseinheit (102) zu der Lage-Steuerungseinheit (100) umfasst, um die Sichtachse (V) des optischen Instruments in Richtung von abzubildenden Bereichen (7) auszurichten,
**dadurch gekennzeichnet, dass** das Verfahren einen zweiten Schritt eines Übertragens (104) einer Regelungsanweisung von der Anweisungseinheit (102) zu der Lage-Steuereinheit (100) umfasst, um die Normale (N, Na, Nb) auf die funktionale Fläche in Richtung der Sonnenstrahlung zu lenken, und
dadurch, dass die Regelungsanweisungen des ersten und des zweiten Schritts lediglich Anweisungen zur Rotation des Satelliten um die Geschwindigkeitsachse (X) sind, wobei der Rotationswinkel um die Orbitalachse (Y) und die Nadirachse (Z) in dem orbitalen Bezugssystem im Wesentlichen bei null gehalten wird.

2. Verfahren nach Anspruch 1, wobei die Regelungsanweisungen Anweisungen umfassen, welche geeignet sind, den Satelliten (1) um die Geschwindigkeitsachse (X) über Winkelbereiche zu schwenken, um mit der Beobachtungsachse (V) einen Abschnitt der Erde zu überstreichen.

3. Verfahren nach Anspruch 1 oder Anspruch 2, durchgeführt durch mehrere Satelliten (1).

4. Verfahren nach einem der vorhergehenden Ansprüche, wobei die Normale (N, Na, Nb) auf die funktionale Fläche des Solargenerators (4) parallel zu der Beobachtungsachse (V) des optischen Instruments (2) und in entgegengesetztem Sinn orientiert ist.

5. Verfahren nach einem der vorhergehenden Ansprüche, wobei die Rotationswinkel um die Geschwindigkeitsachse (X) auf einen vorbestimmten Beschränkungswinkel begrenzt sind, wobei der Führungswinkel bezüglich der Orbitalachse (Y) definiert ist.

6. Verfahren nach Anspruch 5, wobei der Beschränkungswinkel 50° beträgt.

7. Verfahren nach einem der vorhergehenden Ansprüche, wobei während die Beleuchtung des Satelliten (1) null ist, der Satellit (1) um die Geschwindigkeitsachse (X) derart geschwenkt wird, dass die Beobachtungsachse (V) in Richtung der Erde (T) gerichtet wird.

8. Verfahren nach einem der Ansprüche 1 bis 7, wobei die Beobachtungsachse (V) senkrecht zu der Geschwindigkeitsachse (X) ist.

9. Verfahren nach einem der Ansprüche 1 bis 8, wobei das optische Instrument ein Objektiv mit einer optischen Achse umfasst, welche parallel zu der Beobachtungsachse ist.

10. Satellit (1), umfassend einen Hauptkörper (3), ein optisches Instrument (2), dessen Beobachtungsachse (V) bezüglich des Hauptkörpers (3) fest ist, wenigstens einen Solargenerator (4), welcher bezüglich des Hauptkörpers (3) fest ist, wenigstens eine Lage-Steuerungsvorrichtung (100) und eine mit der Lage-Steuerungsvorrichtung (100) verbundene Anweisungseinheit (102), wobei die Anweisungseinheit (102) dazu geeignet ist, das Verfahren zum Anweisen der Regelung nach einem der vorhergehenden Ansprüche durchzuführen, wobei die Lage-Steuerungsvorrichtung (100) dazu geeignet ist, den Satelliten (1) dazu zu veranlassen, um eine erste Achse (x), eine zweite Achse (y) und eine dritte Achse (z) zu schwenken, wobei die erste (x), zweite Achse (y) und dritte Achse (z) untereinander senkrecht sind, wobei die dritte Achse (z) parallel zu der Beobachtungsachse (V) des optischen Instruments (2) und in demselben Sinn orientiert ist, **dadurch gekennzeichnet, dass** die Drehmomentkapazität der Lage-Steuerungsvorrichtung (100) entlang der zweiten Achse (y) und/oder entlang der dritten Achse (z) kleiner als 40% der Drehmomentkapazität entlang der ersten Achse (x) ist.

11. Satellit (1) nach dem vorhergehenden Anspruch, umfassend eine Schnittstellen-Vorrichtung (10), welche dazu vorgesehen ist, mit einer komplementären Schnittstellen-Vorrichtung einer Trägerrakete oder eines Satelliten zusammenzuwirken, und umfassend eine Zwischenstruktur (11), welche den Körper (3) des Satelliten (1) mit der Schnittstellen-Vorrichtung (10) verbindet, wobei die Beobachtungsachse (V) des optischen Instruments (2) in Richtung der Schnittstellen-Vorrichtung (10) orientiert ist.

12. Satellit (1) nach einem der Ansprüche 10 oder 11, wobei die Normale (N, Na, Nb) auf die funktionale Fläche des Solargenerators (4) parallel zu der Beobachtungsachse (V) des optischen Elements (2) ist und in dem entgegengesetzten Sinn orientiert ist.

13. Mehrzahl von Satelliten, welche einem der Ansprüche 10 bis 12 entsprechen und dazu vorgesehen sind, in einer Konstellation zu arbeiten, wobei die Mehrzahl von Satelliten dazu eingerichtet sind, im Orbit durch das Verfahren nach einem der Ansprüche 1 bis 9 geführt zu werden.

14. Computer-Programmprodukt, **dadurch gekennzeichnet, dass** es eine Menge von Programmcode-Anweisungen umfasst, welche während sie von einem Prozessor ausgeführt werden, ein Verfahren nach einem der Ansprüche 1 bis 9 umsetzen.

## Claims

1. Method for controlling the attitude guidance of a satellite (**1**) with respect to an orthogonal orbital reference system (**OXYZ**) comprising a velocity axis (**X**), an orbital axis (**Y**), and a Nadir axis (**Z**), along a portion of its orbit (**A**) around the Earth (**T**), said orbit portion (**A**) being illuminated by solar radiation; the satellite moving in the direction of the velocity axis (**X**), the satellite (**1**) comprising a main body (**3**), an optical instrument (2) having a fixed observation axis (**V**) relative to the main body (**3**), at least one solar generator (**4**) that is fixed relative to the main body (**3**) and defining a functional surface whose normal (**N, Na, Nb**) has at least one component perpendicular to the velocity axis (**X**), at least one attitude control device (100), and a control unit (102) connected to the attitude control device (100), said method comprising a first step (104) of transmitting guidance commands from the control unit (102) to the attitude control unit (100) in order to direct the observation axis (**V**) of the optical instrument towards the regions (7) to be imaged,
**characterized in that** the method comprises a second step (104) of transmitting guidance commands from the control unit (102) to the attitude control unit (100) so as to orient the normal (**N, Na, Nb**) to the functional surface in the direction of the solar radiation, and
**in that** the guidance commands of the first and second steps are commands to rotate the satellite about the velocity axis (X) only, the angle of rotation about the orbital axis (**Y**) and the Nadir axis (**Z**) within the orbital reference system being kept substantially at zero.

2. Method according to claim 1, wherein the guidance commands comprise commands to rotate the satellite (1) about the velocity axis (**X**) over angular ranges in order to sweep a portion of the Earth with the observation axis (**V**).

3. Method according to claim 1 or claim 2, implemented by multiple satellites (1).

4. Method according to any one of the preceding claims, wherein the normal (**N, Na, Nb**) to the functional surface of the solar generator (**4**) is parallel to the observation axis (**V**) of the optical instrument (**2**) and is oriented in the opposite direction.

5. Method according to any one of the preceding claims, wherein the angles of rotation about the velocity axis (X) are limited to a predetermined restriction angle, said guidance angle being defined relative to the orbital axis (**Y**).

6. Method according to claim 5, wherein the restriction angle is 50°.

7. Method according to any one of the preceding claims, wherein when there is no illumination on the satellite (**1**), the satellite (**1**) is rotated about the velocity axis (**X**) so as to point the observation axis (**V**) towards the Earth (T).

8. Method according to any one of claims 1 to 7, wherein the observation axis (V) is perpendicular to the velocity axis (X).

9. Method according to any one of claims 1 to 8, wherein the optical instrument comprises a lens with an optical axis parallel to the observation axis.

10. Satellite (**1**) comprising a main body (**3**), an optical instrument (**2**) whose observation axis (**V**) is fixed relative to the main body (**3**), at least one solar generator (**4**) that is fixed relative to the main body (**3**), at least one attitude control device (100) and a control unit (102) connected to the attitude control device (100), the control unit (102) being able to execute the guidance control method according to any one of the preceding claims, the attitude control device (100) being able to rotate the satellite (1) about a first axis (x), a second axis (y), and a third axis (z), said first (x), second axis (y), and third axis (z) being perpendicular to each other, said third axis (z) being parallel to the observation axis (**V**) of the optical instrument (**2**) and oriented in the same direction, **characterized in that** the torque capacity of the attitude control device (100) along the second axis (y) and/or along the third axis (z) is less than 40% of the torque capacity along the first axis (x).

11. Satellite (**1**) according to the preceding claim, comprising an interface device (**10**) intended to engage with a complementary interface device of a launcher or satellite, and comprising an intermediate structure (**11**) connecting the body (**3**) of the satellite (**1**) to the interface device (**10**), the observation axis (**V**) of the optical instrument (**2**) being oriented towards the interface device (**10**).

12. Satellite (**1**) according to any one of claims 10 and 11, wherein the normal (**N, Na, Nb**) to the functional surface of the solar generator (**4**) is parallel to the observation axis (**V**) of the optical instrument (**2**) and is oriented in the opposite direction.

13. Plurality of satellites according to any one of claims 10 to 12 and intended to operate in a satellite constellation, said plurality of satellites being able to be guided in orbit by the method according to any one of claims 1 to 9.

14. Computer program product **characterized in that** it comprises a set of program code instructions which implement a method according to claims 1 to 9 when executed by a processor.
